# FASCICULE DE BREVET EUROPEEN

(11) **EP 3 813 332 B1**
(45) Date de publication et mention de la délivrance du brevet: **27.07.2022**
(21) Numéro de dépôt: 20213715.4
(22) Date de dépôt: 15.02.2007
(51) Int. Cl.: H04L 65/10, H04L 65/1045, H04L 69/16

(54) **PROCÉDÉ ET SYSTÈME DE TRANSMISSION DE DONNÉES ENTRE NOEUDS ATTACHÉS À DES ENVIRONNEMENTS IP DISTINCTS PAR AFFECTATION D'ADRESSES FICTIVES**
VERFAHREN UND SYSTEM ZUR DATENÜBERTRAGUNG ZWISCHEN MIT VERSCHIEDENEN IP-UMGEBUNGEN VERBUNDENEN KNOTEN DURCH ZUWEISUNG FIKTIVER ADRESSEN
METHOD AND SYSTEM FOR TRANSMITTING DATA BETWEEN NODES ATTACHED TO SEPARATE IP ENVIRONMENTS BY ALLOCATION OF FICTITIOUS ADDRESSES

(30) Priorité: 28.02.2006 FR 0650682
(43) Date de publication de la demande: 28.04.2021
(62) Demande divisionnaire de: 07731631.3
(73) Titulaire: ORANGE, 92130 Issy-les-Moulineaux (FR)
(72) Inventeur: BOUCADAIR, Mohamed, 92326 Châtillon (FR); NOISETTE, Yoann, 92326 Châtillon (FR)

(56) Documents cités:
- EP-A1- 0 840 482
- EP-A2- 1 515 508
- US-A1- 2004 246 991
- US-A1- 2005 185 672
- US-A1- 2005 243 840
- CAMARILLO ERICSSON J ROSENBERG CISCO SYSTEMS G: "Usage of the Session Description Protocol (SDP) Alternative Network Address Types (ANAT) Semantics in the Session Initiation Protocol (SIP)", IETF STANDARD, INTERNET ENGINEERING TASK FORCE, IETF, CH, juin 2005 (2005-06), XP015041907, ISSN: 0000-0003
- CAMARILLO ERICSSON J ROSENBERG CISCO SYSTEMS G: "The Alternative Network Address Types (ANAT) Semantics for the Session Description Protocol (SDP) Grouping Framework", IETF STANDARD, INTERNET ENGINEERING TASK FORCE, IETF, CH, juin 2005 (2005-06), XP015041908, ISSN: 0000-0003
- ABOBA MICROSOFT G ZORN CISCO SYSTEMS D MITTON CIRCULAR LOGIC UNLTD B: "RADIUS and IPv6", IETF STANDARD, INTERNET ENGINEERING TASK FORCE, IETF, CH, août 2001 (2001-08), XP015008943, ISSN: 0000-0003

## Description

L'invention se situe dans le domaine des télécommunications, et plus particulièrement dans celui de la téléphonie sur IP.

Des réseaux conformes à un protocole de communication dit IP (abréviation bien connue de l'homme du métier de l'expression anglaise "Internet Protocol") sont de plus en plus souvent utilisés en tant que supports universels d'une multitude de services et applications. Ce protocole IP a joué un rôle fédérateur auprès de multiples opérateurs qui ont choisi ce protocole pour mutualiser des offres de service jusqu'alors disparates.

IPv4 est une version du protocole de communication IP qui est utilisée depuis des années.

Pour satisfaire des contraintes imposées par de tels services de communication et plus particulièrement pour répondre aux besoins accrus en termes d'adresses, des opérateurs et des constructeurs d'équipements réseau se sont unis pour spécifier un protocole de communication de nouvelle génération, communément référencé IPv6, défini par des spécifications ainsi que des documents d'analyse qui sont à un stade de développement suffisamment avancé pour permettre à présent d'envisager un déploiement opérationnel dans les réseaux des opérateurs.

Néanmoins, l'introduction de cette nouvelle génération de protocole pose des problèmes significatifs liés à un besoin de garantir une interopérabilité et un interfonctionnement du protocole IPv6 et du protocole IPv4 qui est déjà déployé dans les réseaux IP. Dans l'état actuel de la technique des solutions à ces problèmes ont été identifiées, mais elles présentent pour désavantage de ne pas intervenir exclusivement à un niveau "service" (en particulier couche application) mais aussi à un niveau "transport" (couche IP). Dans la couche transport, des mécanismes ont été proposés, voire standardisés à l'IETF (abréviation bien connue de l'homme du métier de l'expression anglaise "Internet Engineering Task Force") tels qu'une technique dite NAT-PT (de l'abréviation anglaise "Network Address Translation-Protocol Translation" pour "traduction d'adresse réseau - traduction de protocole") et diverses techniques connues sous le vocable anglais « tunneling » et consistant à encapsuler des données IPv6 dans des datagrammes IPv4 ou inversement.

En outre, des mises à jour et des adaptations d'architectures et de plateformes de services sont nécessaires pour permettre un interfonctionnement entre clients situés dans des environnements IP de nature différente (IPv4 ou IPv6), et ceci d'une manière aussi transparente que possible pour le client final.

Parmi d'autres activités multimédia, l'IETF a standardisé un protocole appelé SIP (abréviation bien connue de l'homme du métier de l'expression anglaise "Session initiation Protocol") offrant pour principales fonctions l'initiation, la modification et la terminaison de sessions multimédia. Ce protocole SIP constitue un exemple intéressant d'application de la présente invention. Le protocole SIP s'appuie sur un protocole SDP (abréviation bien connue de l'homme du métier de l'expression anglaise "Session Description Protocol") pour produire une description de paramètres relatifs à la session concernée. Une fois une négociation réussie entre deux parties à un appel, ces dernières peuvent échanger des flux média grâce à une activation d'un protocole RTP (abréviation bien connue de l'homme du métier de l'expression anglaise "Real time Transport Protocol"). Des paramètres de sessions RTP sont pré-négociés *via* des messages de signalisation SIP, notamment dans la partie SDP. Ces paramètres sont principalement des adresses de terminaison et des numéros de port qui seront utilisés de part et d'autre d'une liaison de communication à établir.

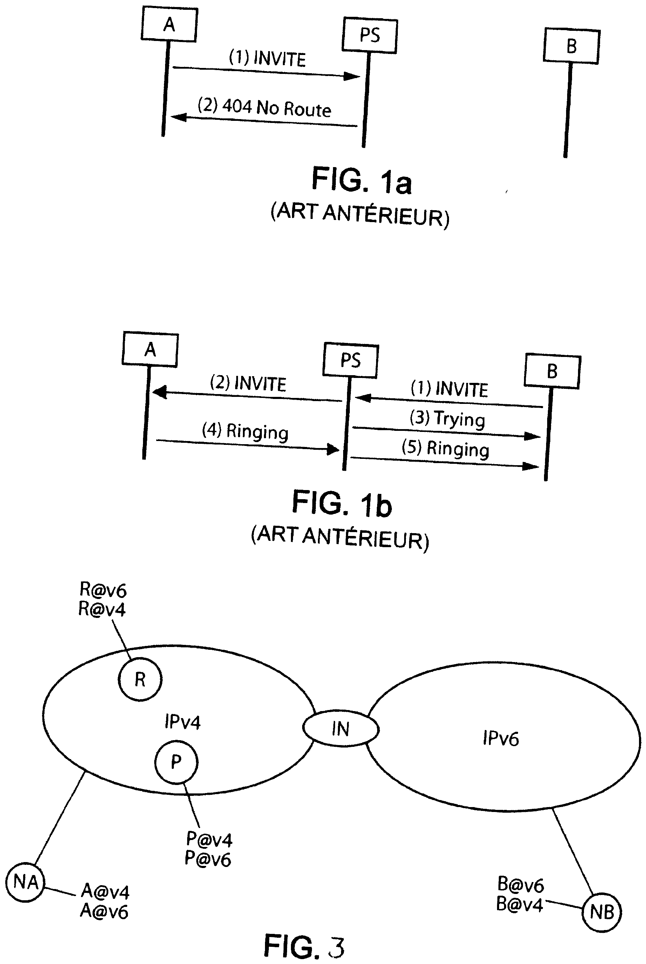

Depuis qu'une première version du protocole SIP a été décrite dans un document référencé RFC 2543 (RFC signifiant "requête pour commentaires" ou "Request For Comment" en anglais), ce dernier est compatible avec le protocole IPv6. Une implémentation du protocole SIP doit être en principe capable de décoder facilement des adresses IPv4 et IPv6. Ces adresses IP peuvent être introduites dans un champ spécifique tel un entête « CONTACT » ou dans des en-têtes de la partie SDP. Cependant, la présence de telles adresses peut empêcher l'établissement des appels SIP dans le cas où les deux terminaux ne sont pas joignables dans un même environnement IP, à savoir si l'une dispose d'une adresse IPv4 et l'autre d'une adresse IPv6. Ainsi quand un agent utilisateur de type IPv4 A initie une session SIP vers un agent utilisateur de type IPv6 qui s'est enregistré auprès d'un serveur de localisation (noté R ci-après) de type IPv4, l'échange de messages SIP produit est décrit dans la figure 1a, où un premier agent utilisateur A désireux d'entrer en contact avec un deuxième agent utilisateur B envoie un message «INVITE» vers un serveur de proximité dit serveur proxy (noté PS ci-après) en utilisant une adresse IPv4 propre à ce dernier. Le serveur proxy PS est ici un serveur attaché à un environnement IPv4 exclusivement. Une fois le message reçu par le serveur proxy PS, ce dernier effectue une requête auprès d'un serveur de localisation encore appelé serveur d'enregistrement et récupère ainsi l'adresse du deuxième agent utilisateur B. Cette adresse étant par hypothèse une adresse IPv6, le serveur proxy PS ne connaît pas de route vers cette destination étant donné que ce serveur proxy PS est exclusivement de type IPv4. Un message d'erreur est alors envoyé vers l'agent utilisateur A concluant à une impossibilité d'établir une session SIP entre les premier et deuxième agents utilisateurs A et B. Ce message d'erreur est noté (2) 404 « No Route » sur la figure 1a.

Si l'on suppose maintenant que le serveur proxy PS peut néanmoins joindre l'adresse de localisation du premier agent utilisateur A ainsi que celle du deuxième agent utilisateur B, un autre échange de messages SIP est observé, quand le deuxième agent utilisateur B essaye d'appeler le premier agent utilisateur A, ainsi que représenté en figure 1b.

Dans ce cas de figure, le serveur proxy PS achemine un message « INVITE » reçu du deuxième agent utilisateur B vers l'adresse de localisation du premier agent utilisateur A. Ce message « INVITE » contient une offre SDP décrivant, outre des capacités offertes par le premier agent utilisateur B en termes de CODEC (pour "codeur/décodeur"), un numéro de port RTP et une adresse qu'utilisera le deuxième agent utilisateur B pour émettre/recevoir des flux RTP. Dans le cas de la figure 1b, cette adresse est de type IPv6. Ainsi, lorsque l'agent utilisateur A reçoit ce message « INVITE », il ne peut que refuser l'ouverture de la session car cet agent utilisateur est un client IPv4. Au mieux pourra-t-il, selon les implémentations, renvoyer un message d'erreur indiquant qu'il ne supporte pas les connexions réseaux vers l'adresse IP de l'agent utilisateur B. Dans les deux exemples précédents, décrits en liaison avec les figures 1a et 1b, les sessions SIP ne peuvent ainsi pas être établies.

Une coexistence d'adresses IP de types différents pourra affecter d'autres appels que ceux ayant fait l'objet de la représentation graphique décrite ci-dessus. Ainsi, des appels destinés à des clients DS (abréviation bien connue de l'homme du métier de l'expression anglaise "Dual Stack"), peuvent aussi ne pas aboutir à des échanges de flux média, les agents utilisateurs de type DS étant en mesure de traiter les deux types d'adresse IPv4 et IPv6. Ceci est dû au fait que le protocole SIP, dans sa version de base, ne permet de renseigner qu'une seule adresse IP pour l'émission ou la réception des flux média. Pour pallier ce problème, un document référencé RFC 4092 introduit une nouvelle sémantique consistant, entre autres, à définir un indicateur dénoté « sdp-anat ». Cette nouvelle sémantique permet à un agent utilisateur, d'annoncer et/ou de découvrir un ou plusieurs types d'adresse. Ainsi, des agents utilisateurs de type DS sont en mesure d'indiquer dans leur offre SDP leurs deux adresses IPv4 et IPv6. Grâce à cette technique, tous les appels de/vers un agent utilisateur de type DS vers/de des clients mono version (i.e. compatibles avec le protocole IPv4 seulement ou avec le protocole IPv6 seulement) peuvent donner lieu à des sessions SIP réussies. Cependant, cette sémantique est réservée exclusivement aux agents utilisateurs de type DS, et n'offre donc pas de solution pour l'établissement réussi de sessions entre clients mono versions.

Dans ce cas particulier où deux nœuds formant des extrémités d'une liaison de communication destinée à véhiculer un appel donné sont mono version, l'opérateur de service de téléphonie SIP concerné peut avoir recours à des applications ALG (abréviation bien connue de l'homme du métier de l'expression anglaise "Application Level Gateway"), pour modifier les offres SDP afin d'assurer une cohérence entre le type d'adresse supporté et celui contenu dans les messages SIP reçus. Pour ce faire les serveurs SIP utilisent des informations relatives à la couche transport, et non propres au protocole SIP, pour router les appels ou pour déterminer le recours à des applications ALG pour altérer le contenu des offres SDP. Un tel comportement des serveurs SIP n'est pas décrit dans la norme.

D'une manière générale le problème lié aux interconnexions de deux agents utilisateurs hétérogènes (c'est-à-dire de types IP distincts) n'a pas été étudié en détail par la communauté des télécommunications. Excepté une proposition ANAT décrite par (RFC 4091, RFC 4092) qui résout une partie du problème, il n'existe en particulier pas de document de l'IETF décrivant le comportement des serveurs SIP pour acheminer des appels reliant deux agents utilisateurs appartenant à deux environnements IP différents.

En outre, les techniques existantes présentent les inconvénients suivants :
- le recours aux applications ALG et aux fonctions d'adaptation supplémentaires n'est pas documenté. Le serveur proxy PS ne dispose pas de moyens prévus par la RFC 3261 pour faciliter cette tâche. En outre, ce recours aux applications ALG et aux fonctions d'adaptation supplémentaires alourdit les tâches accomplies dans le réseau ;
- le serveur proxy PS doit avoir recours à des informations de la couche réseau (encore appelée dans ce document couche transport) pour prendre des décisions concernant la couche service. Il est ainsi amené à prendre en compte d'autres considérations telles que l'adresse source des messages, l'adresse utilisée pour contacter le serveur proxy ou examiner la partie SDP. Ceci risque de nuire aux performances du proxy qui est a priori configuré pour ne traiter que les informations du niveau service ;
- la solution n'est pas générique: la philosophie de routage d'appel et d'intervention du serveur proxy PS dépend de la solution d'interconnexion déployée au niveau transport ;
- le routage des appels repose sur la discrimination des clients: en effet, pour router les appels entre nœuds hétérogènes, le serveur proxy a besoin de connaître le type des nœuds appelé et appelant (IPv4, IPv6 ou DS). Or la complexité de la récupération de ces informations peut nuire aux performances de l'appel.

Les travaux menés par les inventeurs ont mené ceux-ci à conclure que, nonobstant un besoin qui ressort de l'étude qui précède, il n'existe dans l'état de la technique aucune disposition permettant à un serveur proxy de router avec succès un appel vers un nœud distant sans avoir au préalable déterminé le type de ce nœud appelé, une telle carence expliquant pourquoi la plupart des techniques de gestion de communications entre nœuds hétérogènes actuellement à l'étude sont insuffisantes et ne répondent pas aux besoins de service consistant à permettre des communications hétérogènes.

La présente invention offre une solution qui ne présente pas ces inconvénients en proposant un procédé de transmission qui permet à un agent utilisateur, même s'il est mono version, d'annoncer et/ou de découvrir plusieurs types d'adresses, correspondant à des environnements IP différents.

En effet, l'invention propose un procédé de transmission de données entre au moins deux nœuds d'un réseau, un nœud étant attaché à au moins un environnement IP, appelé environnement d'origine.

Selon l'invention, un tel procédé comprend:
- une étape d'affectation, à au moins un agent utilisateur inclus dans l'un desdits nœuds, d'une adresse fictive dans un environnement IP différent dudit environnement d'origine;
- une étape de présentation au moins de ladite adresse fictive et d'une adresse d'origine dudit agent utilisateur dans ledit environnement d'origine lors d'un établissement d'une communication avec au moins un nœud distant.

Ainsi, l'invention repose sur une approche tout à fait nouvelle et inventive de la transmission de données entre nœuds, éventuellement hétérogènes (c'est-à-dire attachés à des environnements IP différents, tels qu'IPv4 et IPv6 par exemple), d'un réseau de communication.

En effet, l'invention propose d'affecter une adresse fictive aux agents utilisateurs, et d'annoncer, et cette adresse fictive, et l'adresse d'origine des agents, lors de l'établissement d'une session de communication avec un agent utilisateur d'un autre nœud du réseau. En prenant l'exemple particulier d'un réseau de communication comprenant certains nœuds situés dans un environnement IPv4 et certains nœuds situés dans un environnement IPv6, la technique de l'invention permet donc d'affecter à un nœud mono version, par exemple un nœud IPv4 exclusivement, une adresse fictive dans l'environnement IPv6.

Conformément au sens courant du terme fictif, une adresse fictive (qu'on pourrait également en anglais désigner par les termes "fake address") désigne ici une adresse qui n'existe qu'en apparence, en ce sens qu'elle ne constitue qu'une adresse de représentation de l'agent utilisateur, et ne peut pas être utilisée au niveau des couches transport du nœud, pour l'acheminement de flux de données.

Dans le cas particulier des échanges conformes au protocole SIP, la technique de l'invention permet donc, dans une variante de réalisation particulière, de généraliser l'utilisation de l'attribut ANAT, jusqu'à présent réservé exclusivement aux nœuds de type Dual Stack, à tous les nœuds et équipements du service, donc notamment aux nœuds et équipements mono versions, qui ne sont attachés qu'à un unique environnement IP (IPv4 seulement ou IPv6 seulement). En effet, comme on le verra plus en détail dans la suite de ce document, les agents utilisateurs mono versions peuvent ainsi utiliser l'attribut ANAT pour y mentionner leur adresse d'origine et l'adresse fictive qui leur a été affectée par l'opérateur du réseau.

L'invention pourrait bien sûr également s'appliquer dans le cas de trois environnements IP distincts, et permettrait d'affecter une troisième adresse (fictive) à des clients qui seraient déjà de type DS, ou deux adresses fictives à des clients mono versions.

On notera que cette affectation peut revêtir différentes formes. En effet, l'adresse fictive peut être configurée de manière définitive à la livraison d'un équipement ou nœud du réseau. Elle peut aussi être attribuée par l'opérateur lors de la connexion de cet équipement au réseau. Elle peut enfin être allouée dynamiquement par l'opérateur, et par exemple être modifiée plus ou moins fréquemment pour des raisons de sécurité.

Grâce à la présentation des adresses fictive et d'origine des agents utilisateurs proposée par l'invention, il n'est plus nécessaire, pour un serveur proxy par exemple, d'entreprendre des démarches pour déterminer le type d'un agent utilisateur appelant ou appelé, en prenant en compte des informations de la couche transport. Dans l'exemple particulier d'un réseau comprenant des environnements IPv4 et IPv6, le serveur proxy n'a ainsi plus besoin de déterminer si un agent utilisateur est de type IPv4, IPv6 ou DS pour réaliser le routage des appels entre nœuds.

Selon un premier aspect de l'invention, un tel procédé de transmission comprenant également une étape d'envoi par ledit agent utilisateur d'un message d'enregistrement à un serveur de localisation, ledit message d'enregistrement comprend au moins lesdites adresses fictive et d'origine dudit agent utilisateur, et ledit message d'enregistrement comprend également au moins un premier indicateur de niveau de priorité de l'une desdites adresses.

Ainsi, lors de la phase préalable d'enregistrement auprès du serveur de localisation (qui peut encore être appelé serveur d'enregistrement, ou "registrar"), l'agent utilisateur communique ses deux adresses, fictive et d'origine, et indique celle de ces deux adresses qui doit être utilisée en priorité.

Dans l'exemple particulier du protocole SIP, l'agent utilisateur émet un message de type REGISTER, dans lequel il insère deux entêtes CONTACT pour chacune des deux adresses ou un seul entête "CONTACT" contenant les deux adresses. Comme on le verra pas la suite, la priorité peut être indiquée en utilisant un paramètre "q" spécifié dans le document référencé RFC3261.

En outre, dans ce cas, un tel procédé comprend également une étape de mémorisation au moins desdites adresses fictive et d'origine et dudit niveau de priorité associé, en référence à un identifiant dudit agent utilisateur.

Le serveur de localisation maintient ainsi une base de données regroupant les adresses fictive et d'origine de chacun des agents utilisateurs qui se sont enregistrés auprès de lui, ainsi éventuellement que d'autres informations utiles. Il peut ainsi, sur requête, transmettre ces informations à un équipement qui en aurait besoin, comme un serveur proxy, ou un nœud intermédiaire du réseau situé à la frontière de deux environnements IP distincts et chargé de réaliser une translation d'adresses, comme on le verra plus en détail ci-après.

Selon une caractéristique avantageuse, ledit premier indicateur de niveau de priorité affecte un niveau de priorité plus élevé à ladite adresse fictive ou d'origine dudit agent utilisateur correspondant à l'environnement IP auquel est attaché un serveur proxy intervenant lors dudit établissement d'une communication avec ledit nœud distant.

L'adresse de l'agent utilisateur qui est marquée comme prioritaire est donc de même type IP que celle du serveur proxy, on est donc assuré que le serveur proxy la comprenne. Cette adresse prioritaire est alors ensuite utilisée pour le routage d'appel. On évite ainsi que l'adresse utilisée pour le routage d'appel ne soit pas comprise par le serveur proxy, ce qui ferait échouer l'appel.

Ladite étape de présentation est exécutée par ledit agent utilisateur dans au moins un message de réponse à un message d'invitation à entrer en communication émis par ledit nœud distant. L'étape de présentation peut être en outre exécutée par ledit agent utilisateur dans au moins un message d'invitation à entrer en communication avec ledit nœud distant.

Ainsi, on allège les tâches accomplies dans le cœur du réseau, et notamment par le serveur proxy, en déportant une partie des traitements dans les nœuds et les terminaux: ce sont les agents utilisateurs qui se chargent d'insérer leurs deux adresses, fictive et d'origine, dans les messages qu'ils émettent. Le serveur proxy n'a alors plus besoin de déterminer le type d'un agent utilisateur appelant ou appelé.

En outre, on homogénéise ainsi le comportement de tous les nœuds terminaux du point de vue de la plateforme de service. En effet, dans l'exemple particulier du protocole SIP, et du point de vue d'un serveur proxy, tous les nœuds, qu'ils soient mono ou multi versions utilisent alors de la même manière le service.

Enfin, l'exécution de cette présentation d'adresses par l'agent utilisateur s'avère particulièrement souple. En effet, dans le cas où un agent utilisateur dispose de plusieurs adresses d'origine de même type (par exemple plusieurs adresses IPv6), il peut alors choisir lui-même, lors de l'initialisation d'un appel, de ne présenter que l'une de ces adresses d'origine, en plus de l'adresse fictive qui lui a été affectée.

Dans un exemple illustratif et non revendiqué, ladite étape de présentation est exécutée par un serveur proxy intervenant lors dudit établissement d'une communication entre ledit agent utilisateur et ledit nœud distant, dans au moins un message d'invitation à entrer en communication avec ledit nœud distant émis par ledit agent utilisateur, et/ou dans au moins un message de réponse à un message d'invitation à entrer en communication émis par ledit nœud distant.

Cette variante peut être complémentaire du mode de réalisation précédent, et constituer un processus de contrôle effectué au niveau du serveur proxy, en cas de défaillance ou dysfonctionnement de l'un des nœuds. Ainsi, si le serveur proxy constate qu'un message qu'il a reçu ne contient pas les adresses fictive et d'origine d'un agent utilisateur, il les insère lui-même, soit parce qu'il sait déterminer ces adresses lui-même, soit après avoir demandé ces adresses au serveur de localisation auprès duquel l'agent utilisateur s'est enregistré.

On pourrait aussi envisager que cette variante de réalisation se substitue au mode de réalisation précédent, et que la présentation soit systématiquement effectuée par le serveur proxy, et non par l'agent utilisateur. Ce n'est cependant pas cette approche qui sera présentée en relation avec les figures dans la suite de ce document.

Avantageusement, lesdits messages d'invitation et de réponse comprennent également au moins un deuxième indicateur de niveau de priorité de l'une desdites adresses, permettant d'affecter un niveau de priorité plus élevé à ladite adresse d'origine dudit agent utilisateur.

C'est en effet cette adresse d'origine qui doit effectivement être utilisée au niveau des couches transport pour les flux média.

Le procédé de l'invention comprend également une étape de transformation d'au moins une adresse de destination d'un message émis par ledit agent utilisateur vers ledit nœud distant, ladite étape de transformation étant destinée à être exécutée lorsque ladite adresse de destination est une adresse fictive et permettant de transformer ladite adresse fictive en adresse d'origine associée.

Une telle transformation peut être effectuée dans un nœud intermédiaire du réseau, situé à la frontière de deux environnements IP et servant de relais entre ces deux environnements. Dans le cas de deux "bulles" IPv4 et IPv6 par exemple, ce nœud intermédiaire effectue alors la conversion de paquets IPv6 en paquets IPv4, et inversement. Cette transformation s'avère particulièrement utile dans le cas où les deux nœuds qui entrent en communication sont rattachés à deux environnements IP distincts (on dit aussi qu'ils sont hétérogènes): la simple transformation d'adresse permet de réaliser le routage du trafic, sans qu'il soit nécessaire de recourir à une application de type ALG.

L'invention concerne aussi un signal de transmission d'un message échangé entre au moins deux nœuds d'un réseau, un nœud étant attaché à au moins un environnement IP, appelé environnement d'origine. Selon l'invention, un tel signal comprend au moins:
- un champ contenant au moins une adresse d'origine dans ledit environnement d'origine associée à un agent utilisateur inclus dans l'un desdits nœuds;
- un champ contenant au moins une adresse fictive affectée audit agent utilisateur dans un environnement IP différent dudit environnement d'origine.

L'invention concerne encore un système de transmission de données entre au moins deux nœuds d'un réseau, un nœud étant attaché à au moins un environnement IP, appelé environnement d'origine. Selon l'invention, un tel système comprend:
- des moyens d'affectation, à au moins un agent utilisateur inclus dans l'un desdits nœuds, d'une adresse fictive dans un environnement IP différent dudit environnement d'origine;
- des moyens de présentation au moins de ladite adresse fictive et d'une adresse d'origine dudit agent utilisateur dans ledit environnement d'origine lors d'un établissement d'une communication avec au moins un nœud distant.

L'invention concerne également plusieurs programmes d'ordinateur comprenant des instructions de code pour la mise en œuvre des étapes du procédé de transmission de données tel que décrit précédemment, lorsque ces programmes sont exécutés par un processeur. Chacun de ces programmes concerne respectivement les étapes du procédé exécutées dans un agent utilisateur, dans un serveur proxy, ou dans des éléments de ressources intermédiaires distribués dans le réseau ou inclus dans un nœud intermédiaire IN situé à la frontière de deux environnements IP distincts.

L'invention concerne enfin un nœud d'un réseau de transmission de données, attaché à un environnement IP, appelé environnement d'origine, et comprenant au moins un agent utilisateur, qui est remarquable en ce qu'il comprend:
- des moyens de mémorisation d'une adresse fictive affectée audit agent utilisateur dans un environnement IP différent dudit environnement d'origine;
- des moyens de présentation au moins de ladite adresse fictive et d'une adresse d'origine dudit agent utilisateur dans ledit environnement d'origine lors d'un établissement d'une communication avec au moins un nœud distant dudit réseau.

Le signal, le système, le nœud et le programme d'ordinateur conformes à l'invention présentent les mêmes avantages que le procédé décrit précédemment.

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- les figures 1a et 1b, déjà commentées en relation avec l'art antérieur, illustre deux exemples d'échec d'établissement d'une session de communication entre deux agents utilisateurs A et B attachés à des réseaux IP de natures différentes;
- la figure 2a illustre les différentes configurations de réseau dans lesquelles le procédé de l'invention peut s'appliquer;
- la figure 2b illustre sous forme d'organigramme les principales étapes du procédé de l'invention;
- la figure 2c présente plus en détail les étapes d'enregistrement de l'organigramme de la figure 2a;
- la figure 3 décrit un exemple de réseau auquel s'applique l'invention, comprenant un réseau IPv4 auquel est rattaché un agent utilisateur NA et un réseau IPv6 auquel est rattaché un agent utilisateur NB;
- la figure 4 illustre sous forme de schéma synoptique un nœud conforme à l'invention.

Le principe général de l'invention repose, dans le cadre d'un réseau de communication comprenant au moins deux environnements IP distincts, sur l'affectation d'une adresse fictive à un agent utilisateur dans un environnement IP distinct de l'environnement IP auquel il est attaché. Cette adresse fictive est ensuite présentée, conjointement à l'adresse d'origine de l'agent utilisateur, dans les messages échangés lors de l'établissement d'une communication avec un autre nœud du réseau.

Dans un exemple particulier de réalisation, auquel on se référera dans toute la suite du document, correspondant à l'établissement de sessions de communication selon le protocole SIP entre nœuds hétérogènes de type IPv4, IPv6 ou DS, le principe de l'invention consiste donc à généraliser l'utilisation de l'attribut ANAT aux clients mono versions, c'est-à-dire IPv4 pur ou IPv6 pur.

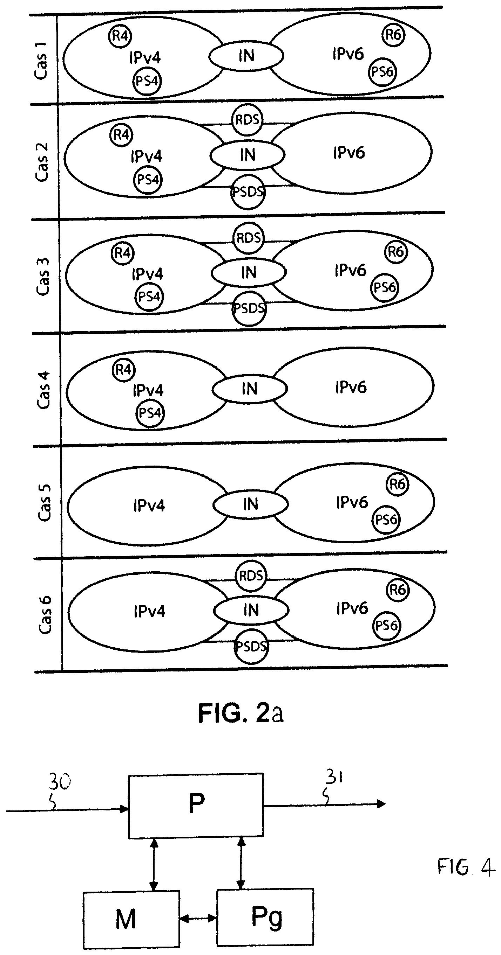

On présente tout d'abord, en relation avec la figure 2a, différentes configurations de réseau (cas 1 à cas 6) dans lesquelles la technique de l'invention peut s'appliquer. Sur cette figure, on considère deux environnements IPv4 et IPv6 interconnectés par un nœud intermédiaire appelé IN (de l'abréviation anglaise "Intermediate Node"). Les notations utilisées sur cette figure 2a sont les suivantes:
- R (pour l'abréviation anglaise "Registrar") désigne un serveur de localisation;
- PS (pour l'abréviation anglaise "Proxy Server") désigne un serveur proxy;
- le chiffre 4 indique que l'équipement considéré est attaché au réseau IPv4;
- le chiffre 6 indique que l'équipement considéré est attaché au réseau IPv6;
- les lettres DS indiquent que l'équipement considéré est de type Dual Stack.
Ainsi, R4 désigne par exemple un serveur de localisation de type IPv4, et PSDS désigne un serveur proxy de type Dual Stack, qui est donc représenté comme rattaché simultanément aux environnements IPv4 et IPv6.

En particulier :
- le cas 1 correspond au cas où chaque environnement IP, de type IPv4 et de type IPv6, comporte un serveur de localisation R4 respectivement R6 et un serveur proxy PS4 respectivement PS6 ;
- le cas 2 correspond à un cas dans lequel l'environnement IP de type IPv6 ne comporte pas de serveur de localisation ni de serveur proxy mais comporte un serveur de localisation double pile RDS et un serveur proxy double pile PSDS;
- dans le cas 3, chaque environnement IPv4 et IPv6 comprend un serveur de localisation R4, R6 et un serveur proxy PS4, PS6. Un serveur de localisation double pile RDS et un serveur proxy double pile PSDS sont en outre prévus ;
- dans le cas 4, seul le réseau IPv4 comprend un serveur de localisation R4 et un serveur proxy PS4.
- le cas 5 correspond à un cas dual du cas 4 ;
- le cas 6 correspond à un cas dual du cas 2.

Dans toute la suite de ce document, on se place dans le contexte particulier du cas 4 ci-dessus, où l'ensemble des éléments constituant la plateforme de service (à savoir le serveur de localisation et le serveur proxy) sont rattachés au réseau IPv4.

Cette configuration correspond en effet, au cas le plus couramment rencontré au niveau opérationnel dans les services déployés des réseaux actuels. L'homme du métier comprendra aisément que l'invention n'est cependant pas limitée à cette configuration particulière, et qu'elle s'applique dans tous les autres cas (cas 1 à 3 et 5 à 6) de la figure 2a.

Cette configuration est illustrée plus en détail sur la figure 3, sur laquelle un nœud SIP NA, un serveur proxy PS et un serveur de localisation R sont rattachés à un réseau IPv4, interconnecté au moyen d'un nœud intermédiaire IN à un réseau IPv6 auquel est rattaché un nœud SIP NB.

Selon le procédé de l'invention, on réalise les modifications suivantes sur les éléments existants :
- une adresse fictive IPv6 est attribuée à chacun des éléments constituant la plateforme de service SIP, soit le serveur proxy PS et le serveur de localisation R. Chacune de ces adresses sert à représenter l'élément de service correspondant dans l'environnement IPv6. En l'occurrence, ces éléments sont purement IPv4 et ne gèrent donc pas les adresses IPv6 au niveau transport. Ils peuvent toutefois décoder/comprendre les adresses IPv6 au niveau applicatif, c'est-à-dire au niveau de la pile SIP.
- chaque nœud SIP IPv4 (en l'occurrence NA) se voit attribuer une adresse fictive IPv6, et chaque nœud SIP IPv6 (en l'occurrence NB) se voit attribuer une adresse fictive IPv4. Toutefois, cela ne fait pas pour autant des nœuds SIP NA et NB des clients double pile. Ces adresses fictives sont utilisées, dans le cadre du procédé objet de l'invention, uniquement par le service SIP. Elles ne sont donc pas exploitées par les couches transports du client correspondant.

L'affectation des adresses est contrainte de telle sorte qu'il existe une fonction **f**() et une fonction **g**(), telles que @v4=**f**(@v6) et @v6=**g**(@v4), où @v4 et @v6 sont des adresses IPv4 et IPv6 respectivement. La définition de ces fonctions est laissée à la libre initiative de l'opérateur, lors de l'implémentation du service. A titre d'exemple, on peut citer les adresses IPv4 mappées ou les adresses IPv4 compatibles, ces deux formats étant décrits par les standards IPv6.

Les adresses IPv4 mappées sont des adresses IPv6 représentées sous la forme ::FFFF:a.b.c.d où a.b.c.d est une adresse IPv4. Les adresses IPv4 compatibles sont des adresses IPv6 représentées sous la forme ::a.b.c.d où a.b.c.d est une adresse IPv4.

On indique simplement que le choix des fonctions **f** et **g** doit être judicieux pour limiter l'impact sur les fonctions de routage.

En effet, une autre contrainte du procédé objet de l'invention résulte de la nécessité d'annoncer dans le plan de routage les adresses précédemment identifiées : les adresses fictives IPv4 affectées aux nœuds SIP IPv6 doivent être annoncées dans l'environnement IP IPv4 et inversement. De plus, les adresses fictives IPv6 affectées aux éléments du service tels que le serveur de localisation, et le serveur proxy doivent être annoncées dans l'environnement IPv6.

Afin de faciliter la représentation et la compréhension de la description ci-après, on suppose ci-après que l'ensemble des éléments fonctionnellement requis pour la mise en œuvre de la présente invention sont embarqués dans le nœud intermédiaire IN, représenté à la frontière des environnements IPv4 et IPv6. On notera toutefois qu'il s'agit d'une simplification de représentation, et que l'ensemble des fonctions / traitements / opérations rendus par le nœud intermédiaire IN peuvent également être répartis dans le réseau selon l'implémentation du service mise en place par l'opérateur de ce dernier.

Typiquement, le nœud intermédiaire IN sert de relais entre les environnements IPv4 et IPv6. Par exemple, le nœud intermédiaire IN reçoit tout trafic provenant des clients IPv6 à destination des adresses IPv6 du serveur d'enregistrement et du serveur proxy. Ensuite le nœud intermédiaire IN effectue la conversion des paquets IPv6 en des paquets IPv4 en ayant recours aux fonctions **f**() et **g**() mentionnées précédemment. Cette conversion peut être effectuée par le nœud intermédiaire IN lui-même s'il connaît directement ces fonctions; le nœud intermédiaire IN peut aussi émettre une requête à destination du serveur de localisation R, qui dispose de la connaissance de ces fonctions ou de la résultante de ces fonctions.

Comme on l'aura noté à la lecture de ce qui précède, le procédé objet de l'invention permet donc la mise en communication des nœuds SIP NA et NB appartenant chacun à un environnement IP d'origine d'un premier type IP, tel que par exemple le type IPv4, respectivement d'un deuxième type IP tel que le type IPv6, les environnements IP d'origine précités étant étrangers l'un à l'autre.

Le nœud NA dispose d'une adresse IP dans le premier environnement IP, de type IPv4 par exemple, que l'on note A@v4, le nœud NB appartenant au deuxième type d'environnement IP, de type IPv6 par exemple, disposant quant à lui d'une adresse d'origine IP, notée B@v6, de type étranger à celui de l'adresse d'origine A@v4 du nœud SIP NA.

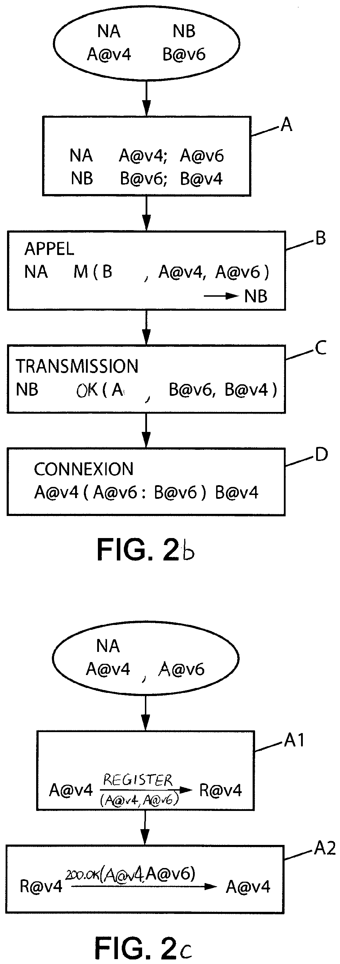

On décrit désormais, en relation avec la figure 2c, la phase d'enregistrement d'un nœud SIP NA auprès d'un serveur de localisation, préalable à tout établissement de session de communication avec un nœud NB distant.

Lors de cette phase d'enregistrement, tout terminal SIP IPv4 respectivement IPv6 implémentant le procédé objet de l'invention doit présenter ses deux adresses : son adresse d'origine IPv4 respectivement IPv6 effective et son adresse fictive IPv6 respectivement IPv4 attribuée par le service pour son propre usage. Pour ce faire, le client utilise par exemple la méthode REGISTER, dans laquelle il insère deux entêtes « CONTACT » une pour chaque adresse, ou un seule entête "CONTACT" avec les deux adresses IPv4 et IPv6.

Pour le cas présentement décrit, cas 4, on a supposé que les éléments du service SIP résidaient dans l'environnement IPv4. Par conséquent, les adresses IPv4 sont avantageusement marquées prioritaires, typiquement lors des messages d'enregistrement, quelle que soit la nature du client IPv4 ou IPv6. Ce marquage est réalisé dans le champ « CONTACT » des requêtes SIP, grâce au paramètre « q », représenté ci-dessous au tableau T1 dans la description ABNF du champ « CONTACT » telle que décrite par le document référencé RFC3162 :

**Tableau T1**

| | |
|---|---|
| Contact = | ("Contact" / "m" ) HCOLON |
| ( STAR / (contact-param *(COMMA contact-param))) | |
| contact-param = | (name-addr / addr-spec) *(SEMI contact-params) |
| name-addr = | [ display-name ] LAQUOT addr-spec RAQUOT |
| addr-spec = | SIP-URI / SIPS-URI / absoluteURI |
| display-name = | *(token LWS)/ quoted-string |
| contact-params = | c-p-q / c-p-expires / contact-extension |
| **c-p-q** = | **"q" EQUAL qvalue** |
| c-p-expires = | "expires" EQUAL delta-seconds |
| contact-extension = | generic-param |
| delta-seconds = | 1*DIGIT |

### Exemple d'enregistrement d'un agent utilisateur UA IPv4 (cas de la figure 2c) :

En supposant que le nœud SIP NA soit un agent utilisateur UA IPv4 dont l'adresse d'origine A@v4 = 171.5.25.2 et que l'adresse d'enregistrement IPv6 allouée par le procédé objet de l'invention soit A@v6 = ipv6A, lors de la phase d'enregistrement, on observe l'échange de messages SI P suivant :
Lors d'une étape référencée 20, le nœud NA envoie un message d'enregistrement REGISTER vers l'adresse R@v4 du serveur d'enregistrement R selon le tableau T2 :

**Tableau T2**

| REGISTER | r.example.com SIP/2.0 |
|---|---|
| Via: | SIP/2.0/TCP 171.5.25.2:5060;branch=z9hG4bKnashds7 |
| Max-Forwards: | 70 |
| From: | A <sip:A@example.com>;tag=a73kszlfl |
| To: | A <sip:A@ example.com>;tag=jqoiweu75 |
| Call-ID: | 1j9FpLxk3uxtm8tn@example.com |
| CSeq: | 1 REGISTER |
| Contact: | <sip:A@171.5.25.2>; q=0.7; expires=3600 |
| Contact: | <sip:A@[ipv6A]>; q=0.3; expires=3600 |
| Content- Lenqth: | 0 |

Lors d'une étape référencée 21, le serveur d'enregistrement R répond avec un message "200 OK" vers l'adresse A@v4 du nœud NA selon le tableau T3 :

**Tableau T3**

| SIP/2.0 200 OK | |
|---|---|
| Via: | SIP/2.0/TCP 171.5.25.2:5060;branch=z9hG4bKnashds7 |
| From: | A <sip:A@example.com>;tag=a73kszlfl |
| To: | A <sip:A@ example.com>;tag=jqoiweu75 |
| Call-ID: | 1j9FpLxk3uxtm8tn@example.com |
| CSeq: | 1 REGISTER |
| Contact: | <sip:A@171.5.25.2>; q=0.7; expires=3600 |
| Contact: | <sip:A@[ipv6A]>; q=0.3; expires=3600 |
| Content- Lenqth: | 0 |

### Exemple d'enregistrement d'un agent utilisateur UA IPv6

En supposant que le nœud SIP NB soit un agent utilisateur UA IPv6 dont l'adresse d'origine est B@v6 = 2001:688:1ffb:ff80::2 et que l'adresse fictive IPv4 affectée par l'opérateur de service SIP soit B@v4 = ipv4B on observe, lors de la phase d'enregistrement, l'échange de messages SIP suivant :
(1) le nœud NB envoie un message d'enregistrement REGISTER vers le serveur d'enregistrement R selon le tableau T4 :

**Tableau T4**

| REGISTER | r.example.com SIP/2.0 |
|---|---|
| Via: | SIP/2.0/TCP 171.5.25.2:5060;branch=z9hG4bKnashds7 |
| Max-Forwards: | 70 |
| From: | B <sip:B@example.com>;tag=a73kszlfl |
| To: | B <sip:B@example.com>;tag=jqoiweu75 |
| Call-ID: | 1j9FpLxk3uxtm8tn@example.com |
| CSeq: | 1 REGISTER |
| Contact: | <sip:B@[2001:688:1ffb:ff80::21>; q=0.1; expires=3600 |
| Contact: | <sip:B@ipv4B>; q=0.7; expires=3600 |
| Content- Lenqth: | 0 |

(2) Le serveur d'enregistrement R répond avec un message "200 OK" au nœud NB selon le tableau T5 :

**Tableau T5**

| SIP/2.0 200 OK | | |
|---|---|---|
| Via: | SIP/2.0/TCP | [2001:688:1ffb:ff80::2]:5060; |
| | branch=z9hG4bKnashds7; received=ipv4B | |
| From: | B <sip:B@example.com>;tag=a73kszlfl | |
| To: | B <sip:B@example.com>;tag=jqoiweu75 | |
| Call-ID: | 1j9FpLxk3uxtm8tn@example.com | |
| CSeq: | 1 REGISTER | |
| Contact: | <sip:B@[2001:688:1ffb:ff80::2]>; q=0.1; expires=3600 | |
| Contact: | <sip:B@ipv4B>; q=0.7; expires=3600 | |
| Content- Lenqth: | 0 | |

On note que, dans le cas d'un nœud SIP IPv6, pour le message d'enregistrement REGISTER, le nœud intermédiaire est vu comme un simple relais IPv4-IPv6. On écarte donc tout traitement lié au service de transmission dans le réseau. Pour alléger le travail du nœud intermédiaire IN, il est préférable que le nœud SIP IPv6 n'utilise pas l'adresse IPv6 du serveur de localisation R en dur, mais plutôt son nom de domaine complet FQDN pour Fully Qualified Domain Name en anglais.

En référence à la figure 2b, on décrit ci-après les différentes étapes mises en œuvre, selon le procédé de l'invention, pour établir une communication entre deux nœuds SIP hétérogènes, c'est-à-dire attachés à des réseaux IP de types différents.

Ainsi, selon le procédé objet de l'invention, au cours d'une étape A, on alloue à chaque nœud et à chaque élément, nœud NA, nœud NB par exemple, une adresse IP fictive dans l'environnement IP étranger à l'environnement IP d'origine auquel appartient le nœud SIP ou l'élément considéré. Ainsi, l'adresse fictive est de type IP étranger à l'environnement IP d'origine du nœud ou de l'élément considéré. Cette étape A d'affectation d'adresse fictive est réalisée à l'initiative de l'opérateur. Elle peut être effectuée lors de la construction d'un nœud ou élément, lors de sa connexion au réseau, ou encore être effectuée dynamiquement (par exemple par changement plus ou moins fréquent des fonctions f et g, pour des raisons de sécurité).

Ainsi que représenté à l'étape A de la figure 2b, on dispose donc :
- pour le nœud NA de l'adresse d'origine de ce dernier A@v4 et de l'adresse fictive A@v6 allouée à ce dernier,
- pour le nœud NB de l'adresse d'origine B@v6 et de l'adresse fictive B@v4 allouée à ce dernier.

L'étape A précitée est suivie d'une étape B consistant à lancer, à partir de l'un des nœuds NA ou NB, le nœud NA à titre d'exemple en liaison avec la figure 2b, dit nœud appelant, vers un autre nœud SIP, le nœud NB en l'occurrence, une procédure d'appel par transmission d'un message d'invitation à entrer en communication contenant au moins l'adresse d'origine et l'adresse fictive du nœud appelant NA vers le nœud appelé NB.

On comprend bien sûr que la transmission de ce message d'invitation, encore appelé message d'appel, est effectuée par l'intermédiaire du nœud IN, ainsi qu'il sera décrit ultérieurement dans la description.

Sur réception du message d'appel par le nœud appelé NB, le procédé objet de l'invention consiste à transmettre du nœud appelé NB vers le nœud appelant NA un message d'acceptation d'appel contenant au moins l'adresse d'origine B@v6 et l'adresse fictive B@v4 du nœud appelé NB.

A l'étape B de la figure 2b, le message d'appel est noté :
M(B, A@v4, A@v6), pour indiquer qu'il est destiné au nœud appelé NB, et qu'il contient les deux adresses fictive et d'origine du nœud appelant NA.

De même, à l'étape C, le message d'acceptation d'appel est noté arbitrairement :
OK(A, B@v6, B@v4) pour indiquer qu'il est destiné au nœud appelant NA, et qu'il contient les deux adresses fictive et d'origine du nœud appelé NB.

L'étape C est alors suivie d'une étape D consistant à établir la connexion d'appel entre le nœud appelant NA et le nœud appelé NB. Cette connexion d'appel est exécutée au niveau du nœud intermédiaire IN par mise en correspondance transitive des adresses d'origine et des adresses fictives, afin d'assurer la traduction des adresses dans l'un et l'autre des environnements IP d'origine du premier respectivement du deuxième type IP.

Pour cette raison, à l'étape D de la figure 2a, la procédure de connexion est notée :
A@v4(A@v6:B@v6)B@v4.

On comprend ainsi que la connexion d'appel est en fait effectuée selon le protocole IP de l'environnement IP d'origine du nœud appelant, lequel ne prend en compte que l'adresse de représentation B@v4 du nœud SIP appelé, alors que le nœud appelé NB pour la transmission de son message d'acceptation d'appel n'utilise en définitive que l'adresse de représentation A@v6 du nœud appelant NA dans l'environnement IP de deuxième type, IPv6.

Dans un mode de réalisation particulier de l'invention reposant sur la généralisation de l'utilisation de l'attribut ANAT à l'ensemble des nœuds SIP d'un réseau, tout nœud SIP IPv4 respectivement IPv6 doit donc, pour passer un appel avec un nœud distant, exploiter l'attribut ANAT des messages SI P pour présenter ses deux adresses: son adresse d'origine IPv4 respectivement IPv6 effective et son adresse fictive IPv6 respectivement IPv4 allouée par le service de transmission pour son propre usage.

Lors d'un appel, le nœud SIP doit utiliser la méthode « INVITE », dans laquelle il utilise l'attribut ANAT dans la partie SDP. Afin de préciser la priorité donnée aux adresses annoncées dans le champ ANAT, la présente invention exploite le champ « mid ». Ce paramètre sert à indiquer la préférence des adresses listées dans le message SDP. Ce paramètre est de préférence codé par ordre croissant des adresses. Typiquement, un nœud SIP IPv4 respectivement IPv6 disposant de son adresse d'origine IPv4 respectivement IPv6 d'origine et de l'adresse fictive IPv6 respectivement IPv4 fournie par le service de transmission SIP, valorise à 1 le champ « mid » pour l'adresse d'origine IPv4 respectivement IPv6 et à 2 pour l'adresse de représentation IPv6 respectivement IPv4. Ce champ « mid » est exploité dans le cas d'échanges avec les nœuds SIP double pile DS. Ceci est illustré par exemple, pour le nœud SIP NA, pour lequel seule la partie SDP est représentée au tableau T6 :

**Tableau T6**

| | | |
|---|---|---|
| v | = | 0 |
| o | = | A 280744730 28977631 IN IP4 host.example.com |
| s | = | |
| t | = | 00 |
| a | = | group:ANAT 1 2 |
| m | = | audio 25000 RTP/AVP 0 |
| c | = | IN IP6 2001:DB8::1 |
| a | = | mid:2 |
| m | = | audio 22334 RTP/AVP 0 |
| c | = | IN IP4 192.0.2.1 |
| a | = | mid:1 |

Lorsque le nœud SIP NB appelé reçoit ce message « INVITE », et qu'il accepte l'appel, il renvoie un message de réponse « 200 OK». Tout client implémentant le procédé objet de l'invention doit, dans son message de réponse « 200 OK », insérer également deux attributs ANAT renseignés avec ses deux adresses et leur codage dans le champ « mid ». Par exemple le nœud SIP NB répond au message « INVITE » précédent par le message représenté au tableau T7, seule la partie SDP de ce dernier étant représentée :

**Tableau T7**

| | | |
|---|---|---|
| v | = | 0 |
| o | = | B 280744730 28977631 IN IP6 B.example.com |
| s | = | |
| t | = | 0 0 |
| a | = | qroup:ANAT 1 2 |
| m | = | audio 25000 RTP/AVP 0 |
| c | = | IN IP6 2001:688:1ffb:ff80::2 |
| a | = | mid:1 |
| m | = | audio 22334 RTP/AVP 0 |
| c | = | IN IP4 172.26.25.2 |
| a | = | mid:2 |

De ce fait, chacun des deux nœuds SIP NA et NB dispose des deux adresses IPv4 et IPv6 de son vis-à-vis. Pour établir l'appel, c'est-à-dire permettre la transmission des flux RTP chaque nœud SIP utilise uniquement la version du protocole IP correspondant à l'environnement IP dans lequel il se trouve. Ceci est assuré dans la mesure où les clients sont soit de type IPv4 pur soit de type IPv6 pur. Concrètement, tout client considéré utilise systématiquement son adresse d'origine et l'adresse du client distant dont le type correspond au type de l'adresse pour laquelle le client considéré a valorisé le champ « mid » avec la plus faible valeur, ce qui assure la cohérence du service.

Ainsi, le nœud SIP IPv4 respectivement IPv6 transmet le trafic RTP à l'adresse fictive IPv4 respectivement IPv6 de son vis-à-vis. Ce procédé permet d'optimiser tout le traitement de l'appel car, dans l'hypothèse où deux nœuds SIP du même environnement IP échangent du trafic, le routage et la transmission des données s'effectuent en direct. Le procédé objet de l'invention n'apporte pas de distorsion au modèle de base de transmission de données et n'impose pas d'intermédiaires lorsque cela n'est pas nécessaire.

Dans le cas où les deux nœuds SIP sont effectivement hétérogènes un terminal IPv4 pur, et un terminal SIP IPv6 pur, le trafic RTP est simplement routé vers le nœud intermédiaire IN qui sert de simple relais IPv4-IPv6. Aucune application ALG n'est alors nécessaire et le service d'interfonctionnement est transparent pour le serveur proxy.

On indique que le nœud intermédiaire IN (ou les ressources correspondantes éventuellement distribuées dans le réseau et réalisant les fonctions de l'invention) implémente et connaît les fonctions f et g et connaît également la correspondance entre un préfixe réseau donné et la fonction à utiliser si la fonction est déployée pour couvrir plusieurs domaines d'opérateurs SIP et donc plusieurs fonctions f/g. D'autre part, les injections dans le plan de routage sont effectuées au niveau du nœud intermédiaire IN IPv4 et du nœud intermédiaire IN IPv6.

### Cas des clients Double Pile DS :

Le procédé objet de l'invention permet de généraliser l'utilisation de l'attribut ANAT pour les nœuds SIP IPv4 et IPv6 afin d'améliorer l'interfonctionnement entre des clients hétérogènes. Toutefois, l'objet, pour le procédé précité, étant de permettre l'interfonctionnement entre tous types de nœuds SIP, il est bien entendu avantageux d'intégrer les nœuds SIP double pile dans le processus.

Afin d'assurer un interfonctionnement totalement transparent, il faut vérifier que :
- les nœuds SIP double pile implémentent et font usage de l'attribut ANAT tel que décrit dans les documents référencés RFC4091 et RFC4092, auquel s'ajoute l'utilisation obligatoire du champ « mid » ;
- par hypothèse (cas 4 de la figure 2a), les éléments du service SIP (serveur de localisation et serveur proxy) ont été placés dans l'environnement IPv4. Par conséquent, il faut imposer aux nœuds SIP double pile d'utiliser exclusivement leur adresse IPv4 et le transport IPv4 pour contacter le serveur d'enregistrement et/ou le serveur proxy. Dans l'hypothèse inverse d'un service en environnement IPv6, on impose aux nœuds DS l'utilisation de leur adresse IPv6 ;
- les nœuds SIP double pile n'ayant pas a priori de préférence parmi les adresses à leur disposition, ils exploitent l'attribut « mid » dans le champ ANAT de la manière suivante :
   - un nœud SIP double pile à l'origine de l'appel peut ne pas valoriser l'attribut « mid » dans le message « INVITE » ou le positionne à des valeurs égales pour ses adresses IPv4 et IPv6.
   - un nœud SIP double pile qui accepte un appel entrant envoie un message de réponse « 200 OK » avec le champ « mid » valorisé de la manière suivante :
      ∘ si le champ « mid » était valorisé à des valeurs différentes dans le message « INVITE » reçu, l'appelant est donc un nœud SIP IPv4 pur ou IPv6 pur, le nœud SIP double pile se conforme à cette valorisation pour formater son message de réponse « 200 OK » selon la même priorité ;
      ∘ si le champ « mid » n'était pas valorisé ou valorisé à des valeurs identiques dans le message « INVITE » reçu, le nœud SIP double pile appelé effectue un choix pour valoriser le champ « mid » dans le message de réponse « 200 OK » qu'il renvoie. La façon dont ce choix est effectuée ne fait pas l'objet de la présente invention et est donc laissée libre à l'implémentation.
   - un nœud SIP double pile qui reçoit un message de réponse « 200 OK» en retour d'un message « INVITE » qu'il a émis se conforme systématiquement à la valorisation du champ « mid » reçu dans le message de réponse « 200 OK ».

### Processus de contrôle

Il peut s'avérer dans certains cas, que certains nœuds SIP ne respectent pas les règles édictées précédemment. Cela peut être le cas, par exemple, en cas de remplacement temporaire d'un terminal défectueux.

Dans ce cas, le codage de l'attribut ANAT ne sera pas effectué par l'agent utilisateur du nœud SIP correspondant. Pour pallier tout dysfonctionnement dans ce cas, une optimisation permettant de contrôler et d'empêcher ce genre d'erreur peut être introduite.

L'optimisation peut consister avantageusement à effectuer un contrôle au niveau du serveur proxy :
- lorsque le champ ANAT est présent, le serveur proxy ne le modifie pas ;
- dans le cas contraire, le serveur proxy ajoute une déclaration sdp-anat en valorisant les champs correspondants avec les adresses d'origine IPv4 et IPv6 de représentation correspondant au nœud SIP appelant. Le serveur proxy peut récupérer ces adresses par requête auprès du serveur d'enregistrement, ou en disposer directement s'il a la connaissance des fonctions **f**() et **g**().
- le serveur proxy doit également coder le champ « mid » conformément à la version du protocole IP du nœud SIP. Pour un nœud SIP IPv4 respectivement IPv6, le serveur proxy donnera la priorité à l'adresse d'origine IPv4 respectivement IPv6.

On présente enfin, en relation avec la figure 4, un schéma synoptique d'un nœud SIP conforme à l'invention. Un tel nœud SIP comprend, outre les moyens connus dans l'art antérieur, une unité centrale P, équipée par exemple d'un microprocesseur, une mémoire M, par exemple de type RAM ("Read Access Memory") et un module logiciel Pg. A l'initialisation, les instructions du logiciel Pg sont par exemple chargées depuis la mémoire M pour être exécutées par le microprocesseur de l'unité centrale P.

Un tel nœud SIP contient un ou plusieurs agents utilisateurs UA, qui possèdent chacun une adresse d'origine dans l'environnement IP auquel est attaché le nœud, par exemple IPv4. Cette adresse d'origine est mémorisée dans la mémoire M. L'opérateur du réseau affecte également une adresse fictive 30 aux agents utilisateurs, dans l'environnement IPv6. Cette adresse fictive est également mémorisée dans la mémoire M.

Sur instructions du module logiciel Pg, l'unité centrale P effectue la présentation 31 des adresses fictives et d'origine de l'agent utilisateur considéré, par exemple lors de l'émission d'un message d'enregistrement auprès d'un serveur de localisation, ou lors de l'émission de messages échangés dans le cadre de l'établissement d'une communication avec un nœud distant du réseau. L'unité centrale positionne également dans ces messages les indicateurs de priorité correspondants.

## Revendications

1. Procédé de transmission de données entre au moins deux nœuds d'un réseau, chacun desdits nœuds étant attaché à au moins un environnement IP, appelé environnement d'origine dudit nœud, comprenant :
- une étape d'affectation, à au moins un agent utilisateur inclus dans l'un (NA) desdits nœuds, d'une adresse fictive dans un environnement IP différent de l'environnement d'origine de ce nœud (NA) ; et
- une étape de présentation au moins de ladite adresse fictive et d'une adresse d'origine dudit agent utilisateur dans ledit environnement d'origine lors d'un établissement d'une communication avec au moins un nœud distant (NB),
**caractérisé en ce que** ladite étape de présentation est exécutée par ledit agent utilisateur, dans au moins un message de réponse à un message d'invitation à entrer en communication émis par ledit nœud distant (NB).

2. Procédé de transmission de données selon la revendication 1 dans lequel ladite étape de présentation est exécutée en outre par ledit agent utilisateur dans au moins un message d'invitation à entrer en communication avec ledit nœud distant (NB).

3. Procédé de transmission de données selon la revendication 1 ou 2, comprenant également une étape d'envoi par ledit agent utilisateur d'un message d'enregistrement à un serveur de localisation (R),
**caractérisé en ce que** ledit message d'enregistrement comprend au moins lesdites adresses fictive et d'origine dudit agent utilisateur, et **en ce que** ledit message d'enregistrement comprend également au moins un premier indicateur de niveau de priorité de l'une desdites adresses.

4. Procédé de transmission selon la revendication 3, **caractérisé en ce qu'**il comprend également une étape de mémorisation par ledit serveur de localisation (R) au moins desdites adresses fictive et d'origine et dudit niveau de priorité associé, en référence à un identifiant dudit agent utilisateur.

5. Procédé de transmission selon l'une quelconque des revendications 3 et 4, **caractérisé en ce que** ledit premier indicateur de niveau de priorité affecte un niveau de priorité plus élevé à ladite adresse fictive ou d'origine dudit agent utilisateur correspondant à l'environnement IP auquel est attaché un serveur proxy (PS) intervenant lors dudit établissement d'une communication avec ledit nœud distant (NB).

6. Procédé de transmission selon l'une quelconque des revendications 1 à 5, **caractérisé en ce que** lesdits messages d'invitation et/ou de réponse comprennent également au moins un deuxième indicateur de niveau de priorité de l'une desdites adresses, permettant d'affecter un niveau de priorité plus élevé à ladite adresse d'origine dudit agent utilisateur.

7. Procédé de transmission selon l'une quelconque des revendications 1 à 6, **caractérisé en ce qu'**il comprend également une étape de transformation par un nœud intermédiaire (IN) situé à la frontière de deux environnements IP distincts et servant de relais entre ces deux environnements d'au moins une adresse de destination d'un message émis par ledit agent utilisateur vers ledit nœud distant (NB), ladite étape de transformation étant destinée à être exécutée lorsque ladite adresse de destination est une adresse fictive et permettant de transformer ladite adresse fictive en adresse d'origine associée.

8. Nœud (NA) d'un réseau de transmission de données, attachable à un environnement IP, appelé environnement d'origine, et comprenant au moins un agent utilisateur comprenant :
- des moyens de mémorisation d'une adresse fictive dudit agent utilisateur dans un environnement IP différent dudit environnement d'origine ; et
- des moyens de présentation au moins de ladite adresse fictive et d'une adresse d'origine dudit agent utilisateur dans ledit environnement d'origine lors d'un établissement d'une communication avec au moins un nœud distant (NB) dudit réseau,
**caractérisé en ce que** lesdits moyens de présentation sont mis en œuvre par ledit agent utilisateur dans au moins un message de réponse à un message d'invitation à entrer en communication émis par ledit nœud distant (NB).

9. Nœud (NA) d'un réseau de transmission de données selon la revendication 8 dans lequel lesdits moyens de présentation sont mis en œuvre par ledit agent utilisateur en outre dans au moins un message d'invitation à entrer en communication avec ledit nœud distant (NB).

10. Système de transmission de données comprenant au moins un nœud (NA) conforme à la revendication 8 ou 9, attaché à au moins un environnement IP appelé environnement d'origine dudit nœud, ledit système comprenant en outre des moyens d'affectation, audit au moins un agent utilisateur inclus dans ledit nœud de ladite adresse fictive dans ledit environnement IP différent de l'environnement d'origine de ce nœud (NA).

11. Programme d'ordinateur comprenant des instructions de code pour la mise en œuvre des étapes du procédé de transmission de données d'au moins l'une des revendications 1 à 7, lorsque ledit programme est exécuté par un processeur.

## Patentansprüche

1. Verfahren zur Übertragung von Daten zwischen mindestens zwei Knoten eines Netzwerks, wobei jeder der Knoten an mindestens eine IP-Umgebung angebunden ist, die Ursprungsumgebung des Knotens genannt wird, umfassend:
- einen Schritt des Zuweisens, an mindestens einen Benutzeragenten, der in einem (NA) der Knoten enthalten ist, einer fiktiven Adresse in einer IP-Umgebung, die von der Ursprungsumgebung dieses Knotens (NA) verschieden ist; und
- einen Schritt des Darstellens zumindest der fiktiven Adresse und einer Ursprungsadresse des Benutzeragenten in der Ursprungsumgebung bei einer Herstellung einer Kommunikation mit mindestens einem entfernten Knoten (NB), **dadurch gekennzeichnet, dass** der Schritt des Darstellens in mindestens einer Antwortnachricht auf eine Nachricht zur Einladung, in Kommunikation zu treten, die von dem entfernten Knoten (NB) gesendet wird, durch den Benutzeragenten ausgeführt wird.

2. Verfahren zur Übertragung von Daten nach Anspruch 1, wobei der Schritt des Darstellens ferner durch den Benutzeragenten in mindestens einer Nachricht zur Einladung, mit dem entfernten Knoten (NB) in Kommunikation zu treten, ausgeführt wird.

3. Verfahren zur Übertragung von Daten nach Anspruch 1 oder 2, ebenfalls umfassend einen Schritt des Sendens, durch den Benutzeragenten, einer Registrierungsnachricht an einen Lokalisierungsserver (R),
**dadurch gekennzeichnet, dass** die Registrierungsnachricht zumindest die fiktive und die Ursprungsadresse des Benutzeragenten umfasst, und dadurch, dass die Registrierungsnachricht ebenfalls mindestens einen ersten Prioritätsniveauindikator einer der Adressen umfasst.

4. Übertragungsverfahren nach Anspruch 3, **dadurch gekennzeichnet, dass** es ebenfalls einen Schritt des Speicherns, durch den Lokalisierungsserver (R), zumindest der fiktiven Adresse und der Ursprungsadresse und des zugehörigen Prioritätsniveaus unter Bezugnahme auf eine Kennung des Benutzeragenten umfasst.

5. Übertragungsverfahren nach einem der Ansprüche 3 und 4, **dadurch gekennzeichnet, dass** der erste Prioritätsniveauindikator der fiktiven oder Ursprungsadresse des Benutzeragenten, die der IP-Umgebung entspricht, an welche ein Proxy-Server (PS) angebunden ist, der bei der Herstellung einer Kommunikation mit dem entfernten Knoten (NB) zum Einsatz kommt, ein höheres Prioritätsniveau zuweist.

6. Übertragungsverfahren nach einem der Ansprüche 1 bis 5, **dadurch gekennzeichnet, dass** die Einladungs- und/oder Antwortnachrichten ebenfalls mindestens einen zweiten Prioritätsniveauindikator einer der Adressen umfassen, der es erlaubt, der Ursprungsadresse des Benutzeragenten ein höheres Prioritätsniveau zuzuweisen.

7. Übertragungsverfahren nach einem der Ansprüche 1 bis 6, **dadurch gekennzeichnet, dass** es ebenfalls einen Schritt des Umwandelns, durch einen Zwischenknoten (IN), der sich an der Grenze zweier gesonderter IP-Umgebungen befindet und als Relais zwischen diesen zwei Umgebungen dient, mindestens einer Zieladresse einer Nachricht umfasst, die von dem Benutzeragenten an den entfernten Knoten (NB) gesendet wird, wobei der Schritt des Umwandelns dazu bestimmt ist, ausgeführt zu werden, wenn die Zieladresse eine fiktive Adresse ist, und es erlaubt, die fiktive Adresse in eine zugehörige Ursprungsadresse umzuwandeln.

8. Knoten (NA) eines Datenübertragungsnetzwerks, der an eine IP-Umgebung angebunden werden kann, die Ursprungsumgebung genannt wird, und umfassend mindestens einen Benutzeragenten umfassend:
- Mittel zur Speicherung einer fiktiven Adresse des Benutzeragenten in einer IP-Umgebung, die von der Ursprungsumgebung verschieden ist; und
- Mittel zum Darstellen zumindest der fiktiven Adresse und einer Ursprungsadresse des Benutzeragenten in der Ursprungsumgebung bei einer Herstellung einer Kommunikation mit mindestens einem entfernten Knoten (NB) des Netzwerks,
**dadurch gekennzeichnet, dass** die Mittel zum Darstellen in mindestens einer Antwortnachricht auf eine Nachricht zur Einladung, in Kommunikation zu treten, die von dem entfernten Knoten (NB) gesendet wird, durch den Benutzeragenten eingesetzt werden.

9. Knoten (NA) eines Datenübertragungsnetzwerks nach Anspruch 8, wobei die Darstellungsmittel ferner in mindestens einer Nachricht zur Einladung, mit dem entfernten Knoten (NB) in Kommunikation zu treten, durch den Benutzeragenten eingesetzt werden.

10. Datenübertragungssystem umfassend mindestens einen Knoten (NA) nach Anspruch 8 oder 9, der an mindestens eine IP-Umgebung angebunden ist, die Ursprungsumgebung des Knotens genannt wird, das System ferner umfassend Mittel zur Zuweisung, an den mindestens einen Benutzeragenten, der in dem Knoten enthalten ist, der fiktiven Adresse in der IP-Umgebung, die von der Ursprungsumgebung dieses Knotens (NA) verschieden ist.

11. Computerprogramm umfassend Code-Anweisungen für die Umsetzung der Schritte des Datenübertragungsverfahrens nach mindestens einem der Ansprüche 1 bis 7, wenn das Programm durch einen Prozessor ausgeführt wird.

## Claims

1. Method for transmitting data between at least two nodes of a network, each of said nodes being attached to at least one IP environment, known as source environment of said node, said method comprising:
- a step of assigning, to at least one user agent included in one (NA) of said nodes, a fake address in an IP environment other than the source environment of this node (NA); and
- a step of presenting at least said fake address and a source address of said user agent in said source environment when a communication is set up with at least one remote node (NB),
**characterized in that** said presenting step is executed by said user agent in at least one response message to a message of invitation to enter into communication sent by said remote node (NB).

2. Data transmission method according to Claim 1, wherein said presenting step is furthermore executed by said user agent in at least one message of invitation to enter into communication with said remote node (NB).

3. Data transmission method according to Claim 1 or 2, also comprising a step of said user agent sending a registration message to a location server (R), **characterized in that** said registration message comprises at least said fake address and said source address of said user agent, and **in that** said registration message also comprises at least one first priority level indicator for one of said addresses.

4. Transmission method according to Claim 3, **characterized in that** it also comprises a step of said location server (R) storing at least said fake address and said source address and said associated priority level in connection with an identifier of said user agent.

5. Transmission method according to either one of Claims 3 and 4, **characterized in that** said first priority level indicator assigns a higher priority level to said fake or source address of said user agent that corresponds to the IP environment to which a proxy server (PS) involved in said setup of a communication with said remote node (NB) is attached.

6. Transmission method according to any one of Claims 1 to 5, **characterized in that** said invitation and/or response messages also comprise at least one second priority level indicator for one of said addresses, allowing a higher priority level to be assigned to said source address of said user agent.

7. Transmission method according to any one of Claims 1 to 6, **characterized in that** it also comprises a step of an intermediate node (IN), which is located at the boundary of two distinct IP environments and serves as a relay between these two environments, converting at least one destination address of a message sent by said user agent to said remote node (NB), said conversion step being intended to be executed when said destination address is a fake address and allowing said fake address to be converted into an associated source address.

8. Node (NA) of a data transmission network, which can be attached to an IP environment, known as source environment, and comprises at least one user agent comprising:
- means for storing a fake address of said user agent in an IP environment other than said source environment; and
- means for presenting at least said fake address and a source address of said user agent in said source environment when a communication is set up with at least one remote node (NB) of said network,
**characterized in that** said presentation means are implemented by said user agent in at least one response message to a message of invitation to enter into communication sent by said remote node (NB).

9. Node (NA) of a data transmission network according to Claim 8, wherein said presentation means are furthermore implemented by said user agent in at least one message of invitation to enter into communication with said remote node (NB).

10. Data transmission system comprising at least one node (NA) in accordance with Claim 8 or 9, which is attached to at least one IP environment, known as source environment of said node, said system further comprising means for assigning, to said at least one user agent included in said node, said fake address in said IP environment other than the source environment of this node (NA).

11. Computer program comprising code instructions for implementing the steps of the data transmission method of at least one of Claims 1 to 7 when said program is executed by a processor.
